# EUROPEAN PATENT SPECIFICATION

(11) **EP 2 815 314 B1**
(45) Date of publication and mention of the grant of the patent: **11.01.2017**
(21) Application number: 13705236.1
(22) Date of filing: 07.02.2013
(51) Int. Cl.: G06F 9/455, H04L 12/26

(54) **ASSESSMENT OF TRANSACTION-LEVEL INTEROPERABILITY OVER A TACTICAL DATA LINK**
BEURTEILUNG DER INTEROPERABILITÄT BETREFFEND TRANSAKTIONEN ÜBER EINE TAKTISCHE DATENVERBINDUNG
ÉVALUATION D'INTEROPÉRABILITÉ AU NIVEAU DE TRANSACTION SUR UNE LIAISON DE DONNÉES TACTIQUES

(30) Priority: 14.02.2012 GB 201202746
(43) Date of publication of application: 24.12.2014
(73) Proprietor: BAE Systems PLC, London SW1Y 5AD (GB)
(72) Inventor: JOHNSON, Julian, Frazer, Ewart, Preston Lancashire PR4 1AX (GB); HOLMES, Christopher, Kenneth, Ashtead Surrey KT21 2UE (GB); GARDINER, John, Preston Lancashire PR4 1YR (GB)
(74) Representative: BAE SYSTEMS plc Group IP Department
(86) International application number: PCT/GB2013/050279
(87) International publication number: WO 2013/121178

(56) References cited:
- US-A1- 2012 029 900
- US-B1- 6 442 618
- HE ZHAO-XIONG ET AL: "Modeling and Simulation of Link-16 System in Network Simulator 2", MULTIMEDIA INFORMATION NETWORKING AND SECURITY (MINES), 2010 INTERNATIONAL CONFERENCE ON, IEEE, PISCATAWAY, NJ, USA, 4 November 2010 (2010-11-04), pages 154-158, XP031837402, DOI: 10.1109/MINES.2010.41 ISBN: 978-1-4244-8626-7
- ABDULLAHL M S ET AL: "Modelling knowledge based systems using the executable modelling framework (XMF)", CYBERNETICS AND INTELLIGENT SYSTEMS, 2004 IEEE CONFERENCE ON SINGAPORE 1-3 DEC. 2004, IEEE, PISCATAWAY, NJ, USA, vol. 2, 1 December 2004 (2004-12-01), pages 1055-1060, XP010812886, DOI: 10.1109/ICCIS.2004.1460735 ISBN: 978-0-7803-8643-3

## Description

The present invention relates to Tactical Data Links.

The domain of the Tactical Data Links (TDLs/TADIL) comprises a family of related technologies that have been developed over many years to coordinate and control the dissemination of information within the battlespace to support joint and combined operations. Consequently, various forms of TDL have been developed to support specific battle groups. The TDLs feature differing waveforms, bandwidths, protocols and capabilities. The US identifies members of the domain of TADILs via a postfix identifier (e.g. A, B, C, F, J, K, M). In addition to these, a number of TDLs are under development to support specific roles, such as the control of autonomous vehicles and intelligence video feeds.

The TDLs are generally defined by either, and in some cases both, of two families of standards: NATO STANAGs and US Department of Defense MIL-STDs. Although only partial coverage of the TDLs is provided, each standard provides a definition of one or more variant of TDL implementation, platform-specific documentation is usually derived from the 'base standard'. There also exist standards relating to the data forwarding from one TDL to another, e.g. STANAGs 5601 & 5616. It is important to note that these standards are document-based and, in some cases, very large indeed, in the case of MIL-STD-6016D extending to 8800 pages.

The exchange of information across the TDL at the brain-to-brain level is based on the common understanding of a clear semantics of the messages to be exchanged by cooperating assets. Unfortunately, the standards (STANAG 5516 & MIL-STD-6016C) describing the most widely used TDL, Link 16 (or TADIL-J), do not provide an adequate level of rigour and are not based on any discernable model. The standards are expressed primarily in narrative form and are voluminous; for instance, MIL-STD-6016D comprises in excess of 8800 pages. Furthermore, the standards describe the link requirements for all possible domains; in practice, most platforms will only implement a subset of the standard as is deemed appropriate to the platform's role (e.g. fighter, bomber, reconnaissance, etc.). However, the standards do not provide an explicit definition of common platform profiles.

This situation leads to variations in TDL implementations across similar platforms and the situation may be exacerbated by the use of terminals produced by different vendors. The resulting situation makes an analysis of platform interoperability very labour intensive and potentially error prone. Furthermore, the interoperability analyses tend to occur towards the end of the life-cycle after the equipment has been specified and developed, making changes and/or corrections expensive in terms of both time and finances.

Assessing a TDL platform's compliance against the link standard (e.g. as described by MIL-STD-6016C) is therefore a challenging task. The TDL standards (such as 6016C) are known to suffer from a number of issues, such as: use of natural language; ambiguity; document size and structure, and consistency and completeness.

In some cases it is useful to identify a definition of the transaction-level requirements for a platform to meet an interoperability goal and (conversely) establishing the platform interoperability at the level of the transaction. A transaction is an ordered sequence of statements that must be processed by the receiving platform in response to some stimulating event. For example, at design time the TDL engineer will be attempting to produce a requirement and/or specification of the behaviour expected of a TDL platform to satisfy a more abstract requirement defining the information to be exchanged between an arbitrary number of TDL platforms; this requirement is generally provided in the form of one or more Information Exchange Requirements (IERs). At implementation time, and at subsequent phases in the life-cycle, the TDL engineer will be attempting to measure the TDL platform's interoperability with an arbitrary number of other platforms, e.g. following the introduction of a new platform into the network, or following the definition of a new IER/strategic requirement.

TDLs are underpinned by a standard defining a family of messages that may be used for a multitude of purposes. As mentioned previously, such standards are generally very large, comprise much prose and are therefore not amendable to machine checking. In order to constrain the potential variability that would otherwise be allowed at run-time, the message structures are aggregated based on their expected use; in the case of Link 16 this structuring concept is known as the Message Use (VMF uses the term Message Case to represent a similar concept). In the case of Link 16, each Message Use is linked to a specific *transaction* that must be executed upon receipt of a message with specific defined characteristics, and it is execution of the transaction that results in the TDL terminal performing some action, such as displaying a track to the user, alerting the user to some situation, etc. Hence, the above requirements can be recast as the questions:
- How does one platform stimulate one or more specific transactions (behaviour) in a receiving platform, both in an ideal implementation and also given specific implementation characteristics?
- If a platform receives a specific message payload, which transactions (if any) would be stimulated, both in an ideal implementation and also given specific implementation characteristics?

In the case of Link 16, a subset of the contained fields of a received message are analysed against a collection of specific values defined for each of the available Message Uses, such analysis may identify that zero or more Message Uses are applicable for a given message instance resulting in the execution of zero or more transactions.

US 6 442 618 discloses a computer implemented transaction processing system for processing transactions between an application and one or more transaction processors.

He Zhao-Xiong et al, "Modelling and Simulation of Link-16 System in Network Simulator 2", Multimedia Information Networking and Security (MINES), 2010 International Conference On, IEEE, Piscataway, NJ, USA, 4 November 2010, pages 154 - 158 relates to evaluating performance of TDL Link 16.

US 2012/029900 relates to methods and systems for simulating a multicore hardware platform the devices of which are modelled by functional or cycle-based models.

Embodiments of the present invention are intended to address at least some of the problems discussed above.

According to a first aspect of the present invention there is provided a method of assessing transaction-level interoperability over a Tactical Data Link (TDL), the method including:
obtaining TDL transaction model data for a platform and/or a TDL standard, the TDL transaction model data including data representing a plurality of TDL transactions that can be performed by the platform or which are available to the standard, and data describing a plurality of messages that stimulate particular said TDL r transactions and details of messages that may be composed by the platform according to the standard or platform-specific documentation;
obtaining message data representing a message to be transferred over the TDL,
using the message data with the TDL transaction model data to assess which of the plurality of TDL transactions the message represented by the message data will stimulate according to the TDL transaction model, and
processing the result of the assessment.

The method may include using the TDL transaction data with the TDL transaction model data to assess which of the plurality of messages will stimulate the desired TDL transaction according to the transaction model includes determining field characteristics of a message to be transmitted so that the desired TDL transaction is executed.

The TDL transaction model data may include data relating to at least one Transmit specification and/or at least one Receive specification, e.g. a Link 16 Transmit/Receive table.

The step of using the TDL transaction data with the TDL transaction model data to assess which of the plurality of messages will stimulate the desired TDL transaction according to the TDL transaction model may include:
generating valid message data from values within key fields of a message known to cause a receiving platform to trigger the desired TDL transaction according to the TDL transaction model data, and
confirming that the valid message is valid against rules defined by at least one the Transmit specification.

The step of using the message data with the TDL transaction model data to assess which of the plurality of TDL transactions the message represented by the message data will stimulate according to the TDL transaction model can include:
generating valid message data populated with values that are valid with respect to the standard, and
evaluating the valid message data against the TDL transaction model data to identify which (if any) of the plurality of TDL transactions will be stimulated upon receipt of the valid message data.

The TDL transaction model data may be used to check whether another platform will execute the desired TDL transaction upon receipt of the message.

The method may further include creating the TDL transaction model data using information derived from at least part of a standards document relating to the TDL. The creating can include parsing at least part of the standards document to populate at least one model. The populated model may then be validated against domain-specific well-formedness constraints.

The method may further include creating the TDL transaction model data using information derived from at least part of an implementation document relating to the platform. The creating can include parsing at least part of part of the implementation document to populate at least one model. The populated model may then be validated against domain-specific well-formedness constraints. The model template may comprise an executable model, e.g. an XMF or Eclipse Modelling Framework (EMF) model. The TDL may comprise a Link 16. The message data may be transferred to/from the platform from/to another platform.

The method may be used at platform level to determine TDL transaction-level interoperability. The method may be used at standard level to determine consistency by identifying error cases such as the formation of message payloads that will not stimulate any TDL transaction(s) and the definition of TDL transaction stimuli that cannot be provided by a well-formed message payload.

According to another aspect of the present invention there is provided a method of assessing transaction-level interoperability over a Tactical Data Link, the method including:
obtaining TDL transaction model data for a platform and/or a TDL standard, the TDL transaction model data including data representing a plurality of TDL transactions that can be performed by the
   platform or which are available according to the standard, and data describing a plurality of messages that stimulate particular said TDL transactions and details of messages that may be composed by the platform according to the standard or platform-specific documentation;
obtaining TDL transaction data representing a desired TDL transaction to be stimulated from amongst the plurality of TDL transactions,
using the TDL transaction data with the TDL transaction model data to assess which of the plurality of messages will stimulate the desired TDL transaction according to the TDL transaction model, and
processing the result of the assessment.

According to other aspects of the present invention there are provided systems configured to execute methods substantially as described herein.

According to other aspects of the present invention there are provided computer program elements comprising: computer code means to make the computer execute methods substantially as described herein. The element may comprise a computer program product.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:
Figure 1 schematically illustrates an example of transaction-level interoperability analysis for two platforms communicating over a TDL network, including a computing device configured to execute a tool for assessing transaction-level interoperability;
Figure 2 illustrates steps performed in order to be able to assess transaction-level interoperability, including use of the tool;
Figure 3 schematically illustrates models that can be used by the tool;
Figure 4 is a collaboration diagram showing operations performed to capture a Transmit Table;
Figure 5 is a collaboration diagram showing operations performed to capture a Receive Table;
Figure 6 is a collaboration diagram showing operations for determining a transaction that will be stimulated by a message;
Figure 7 is a collaboration diagram showing operations for determining a message that will stimulate a transaction;
Figures 8 to 10 schematically illustrate a summary view of models that can be used by the tool;
Figures11 and 12 schematically illustrate example Transmit and Receive rules, respectively, as provided by an example TDL standard;
Figure 13 schematically illustrates an example of display implementation requirements as provided by an example TDL standard;
Figures 14 and 15 schematically illustrate Rules and Data Sources models, respectively, and
Figure 16 illustrates evaluation of the ability of a Receive rule.

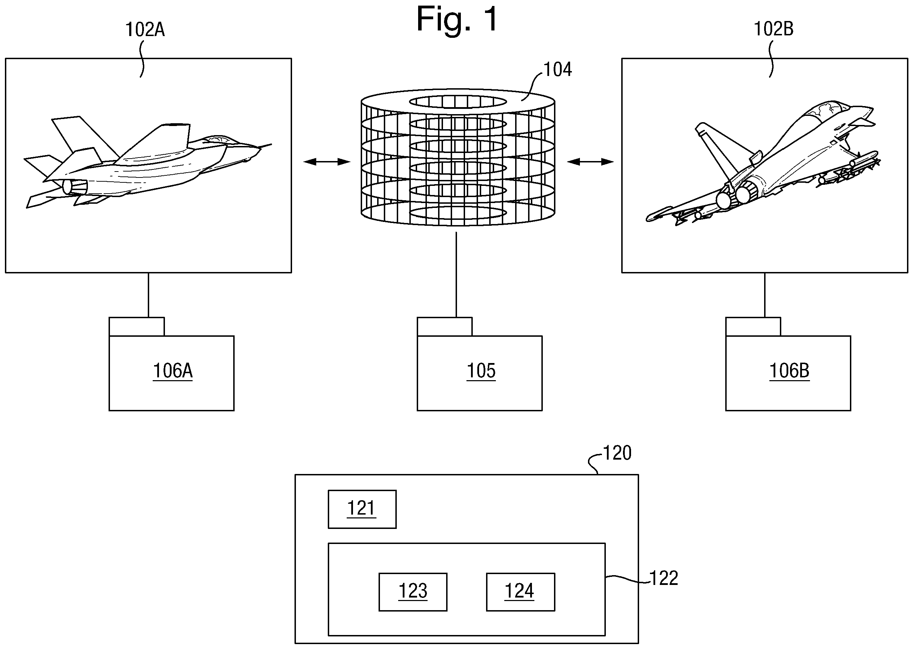

Figure 1 shows a first platform 102A and a second platform 102B. In the example the platforms comprise two different types of aircraft, although the term "platform" is intended to be interpreted broadly and can cover any type of vehicle, installation, etc, that needs to be put into communication with another platform of the same or different type. In the example the platforms communicate tactical data via a Link 16 TDL network 104, although it will be understood that embodiments of the present invention can be produced for dealing with any type of data being transferred over any type of TDL, e.g. VMF. Further, the approach may also be used to assess interoperability of homogeneous/heterogeneous equipment over any defined (modelled) network protocol.

The Link 16 communication characteristics for each of the platforms 102A, 102B are defined by respective specifications, which in the example take the form of the underlying communication link standard(s) - the TDL base standard 105 - and the elements of the base standard implemented by the platform 106A and 106B, which may comprise Actual Platform Implementation Specification (APIS).

Embodiments described herein use document parsers to capture the document-based information in the form of populated models and the approach taken is to parse the source material via a number of hand-written parsers and generate a number of XML documents conforming to defined schemata. The use of XML documents with an associated XML schema provides both well-formedness and validity checking of the XML documents. These XML documents are then parsed into a modelling tool to instantiate the relevant models and perform the interoperability analysis and rendering of results. Specific embodiments use both XMF (Mosaic) and the Eclipse Modelling Framework (EMF; see, for example, Stienberg, D., Budinsky, F., Paternostro, M., Merks, E., 'EMF - Eclipse Modeling Framework', 2nd ed., Addison-Wesley, 2008), hence the interoperability analysis approach is not dependent upon any particular implementation technology. It should be noted that an additional benefit of a model-based approach, (re)capturing the source material in the form of an executable model is that well-formedness constraints may be applied to the resulting instantiation; such well-formedness constraints may be somewhat more powerful than may be achievable via the XML schema.

Figure 1 further schematically shows a computing device 120 including a processor 121 and a memory 122 storing a tool 123 for executing a method of assessing interoperability over the TDL. The computing device may be located onboard either or both of the platforms 102A, 102B, or at a remote location. Data based on the base standard 105 and the implementation 106A, 106B can be processed to produce a model 124 that represents at least transaction-level characteristics of the platforms. The model can be used by the tool 123 for running queries that assist with assessing interoperability between the platforms. The interoperability assessment may include one or more aspects, e.g. message interoperability, in addition to transaction level interoperability assessment. Alternatively, the tool 123 may be used to evaluate transaction-level interoperability of the standard 105 itself, in which case data based on implementation specifications 106A, 106B is not used.

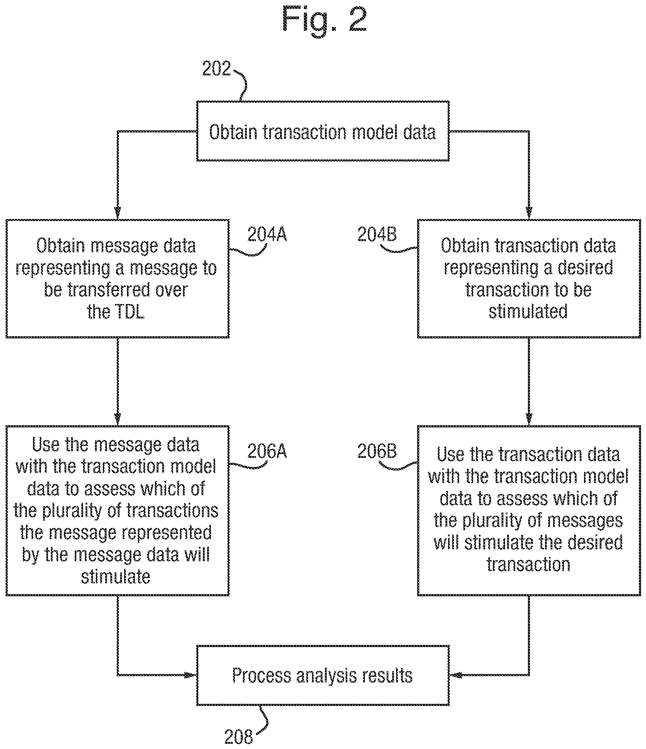

Figure 2 illustrates steps that can be performed by the tool 123 (which may comprise one or more modules executing on one or more computing devices) in order to be able to assess transaction-level interoperability over a TDL link. At step 202, transaction model data 124 is obtained. As will be detailed below, this model data can be based on information obtained from documentation: a TDL standard and, in some cases, documentation relating to a specific platform. The transaction model data includes information regarding the transactions that can be performed by the platform (or which are available according to the standard), as well as details of messages that stimulate particular transactions and details of messages that may be composed by the platform according to the standard or platform-specific documentation.

Following step 202, either step 204A or step 204B is executed, depending on how a user elects to use the tool 123. If the user wishes to find out which transaction(s), if any, would be stimulated upon receipt of a particular message then control passes to step 204A. Here, data representing the message to be transferred over the TDL is obtained, e.g. by the user inputting details of the message (which may be checked against any constraints governing the formation of a message with a valid payload). Alternatively, if the user wishes to investigate how to stimulate a specific transaction (behaviour) according to the standard/platform specification then control passes to step 204B. Here, transaction data representing a desired transaction to be stimulated from amongst the plurality of transactions included in the model is obtained, e.g. by the user inputting or selecting details of the transaction.

Following step 204A, control passes to step 206A. Here, the message data is processed, along with the transaction model data 124, to assess which of the plurality of transactions stored in the model the message will stimulate.

Alternatively, following step 204B, control passes to step 206B. Here, the transaction data is processed, along with the transaction model data 124, to assess which of the messages stored in the model will stimulate the desired transaction.

Following step 206A or 206B, one or more further steps 208 may be performed, depending on the particular implementation. For instance, information regarding the results of the processing may be displayed to the user, or another action, such as sending a message that the method has verified to a platform over the TDL link. In some embodiments, the results of the interoperability analysis are rendered in human-readable form, e.g. HTML. The model-based approach adopted by the embodiments provides flexibility in output formats, hence MS Word™, MS Excel™, XML, etc. can be supported with ease.

A detailed description of the creation and use of the model 124 will be given below using a number of collaboration diagrams showing the types of communicating analysis objects used via three standard stereotypes: boundary, control, and entity. In order to create the model, the TDL Engineer captures the source material relevant to the standard(s) and/or platform(s) of interest. The TDL engineer (or another user) can then use the analysis tool 123 to establish the transaction-level analysis characteristics.

As a result of an analysis of the information contained in the source material (primarily the Link 16 standard for the detailed example) and a desire to separate semantic information from presentation aspects a set of interrelated models is used. These models have similarities to the models for the Messages, Data Dictionary, and Message Specification described in the applicant's earlier pending WO2012/168692.

That specification describes the creation of models (metamodels) of the standard and platform-specific components relating to the message structures to be passed across the data link, and also parsers able to extract the relevant source material in a form suitable to populate the models with the relevant semantic data.

A metamodel typically comprises a precise definition of the constructs and rules needed for creating semantic models. The metamodel can underpin the model by defining some domain of relevance and constraining the scope of those models that are declared valid within this domain. A metamodel may be used to attach semantics to a model, such that not only are the concepts to be modelled described, but also their meaning. The metamodels used in embodiments of the present system will normally be executable, such that models (instances of the metamodels) may be checked by a suitable tool for validity against the metamodel. A metamodel may be considered analogous to the schema used to define the structure of a database in terms of the entities and relations.

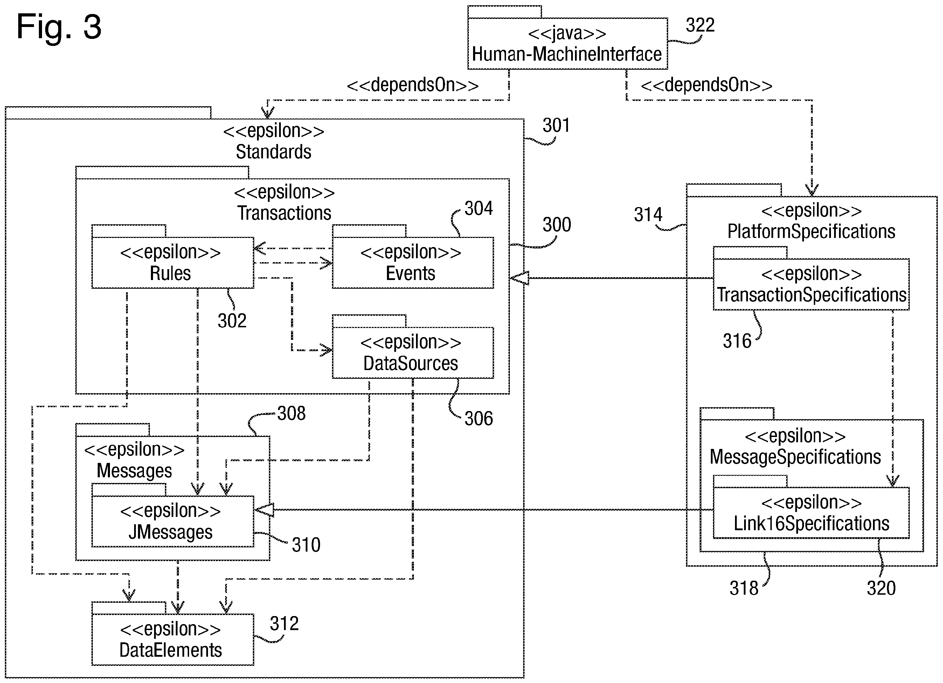

Figure 3 illustrates schematically models that can be used by the interoperability analysis tool 123. These include a Transactions package/model 300, which is part of a Standards package 301, which is based on data obtained from a standards document. Once populated, the models may then be checked via the application of well-formedness rules. The models may also be queried and transformed into alternate structures (e.g. new models, views, etc.), i.e. the example models are executable. The structure of the Transactions model 300 has been informed by an analysis of the Link 16 TDL standard and will be described below.

The Transactions package 300 contains the packages Rules 302, Events 304 and DataSources 306 (to be described below). The Standards package also contains a Messages package 308 (itself containing a JMessages package 310) and a DataElements package 312. A PlatformSpecification package 314 is based on data obtained from platform-specific sources (when such sources are to form part of the analysis) and includes a TransactionSpecifications package 316, as well as a MessageSpecifications package 318 (which itself contains Link16Specifications package 320). The message-based components 308, 310 and 318 are described in the patent filing referenced above. JMessages in the JMessages model 310 are exchanged between cooperating Link 16 platforms. The messages are arranged in functionally-oriented groups. JMessages comprise a varying number of JWords of fixed size (70 bits). JWords are of various types (Initial, Extension, Continuation), and each JWord comprises a number of fields, each of which is drawn from the underlying dictionary of Data Elements (which defines the relevant characteristics such as the size in bits). A Man-Machine Interface (MMI) 322 allows the user to determine creation/use of the various models.

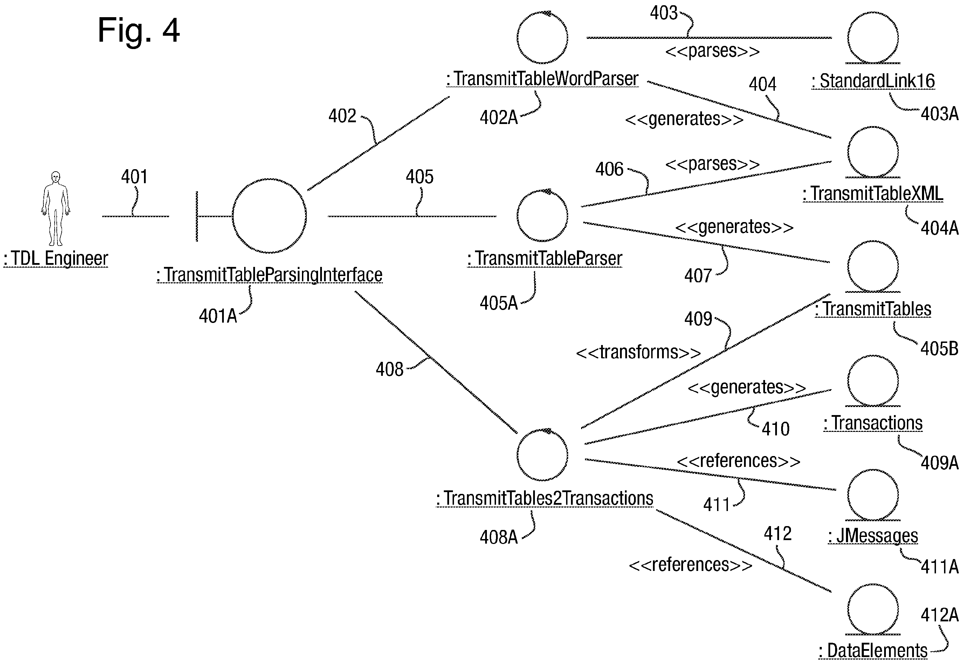

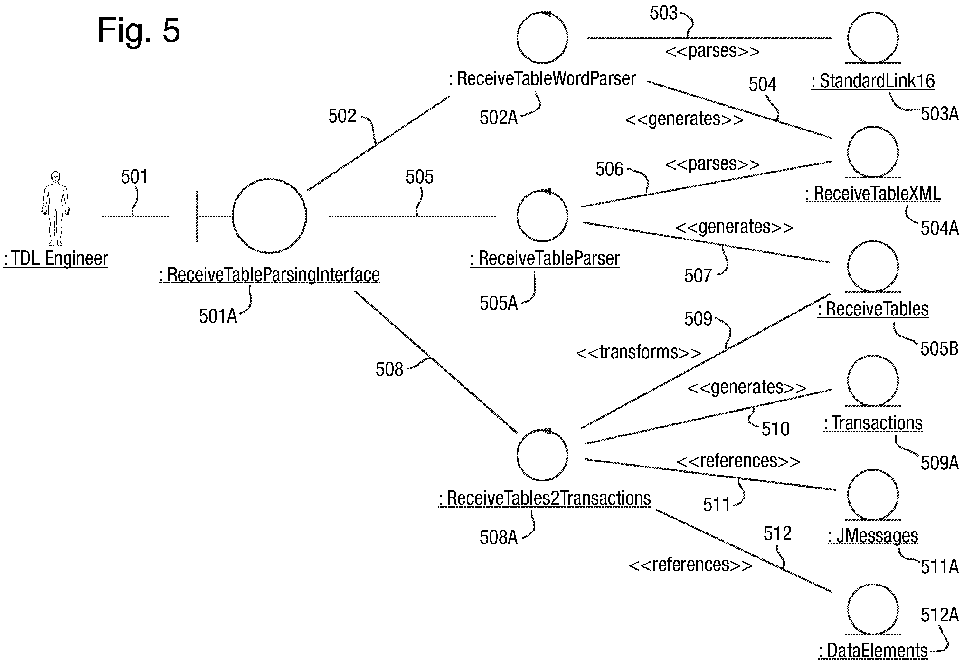

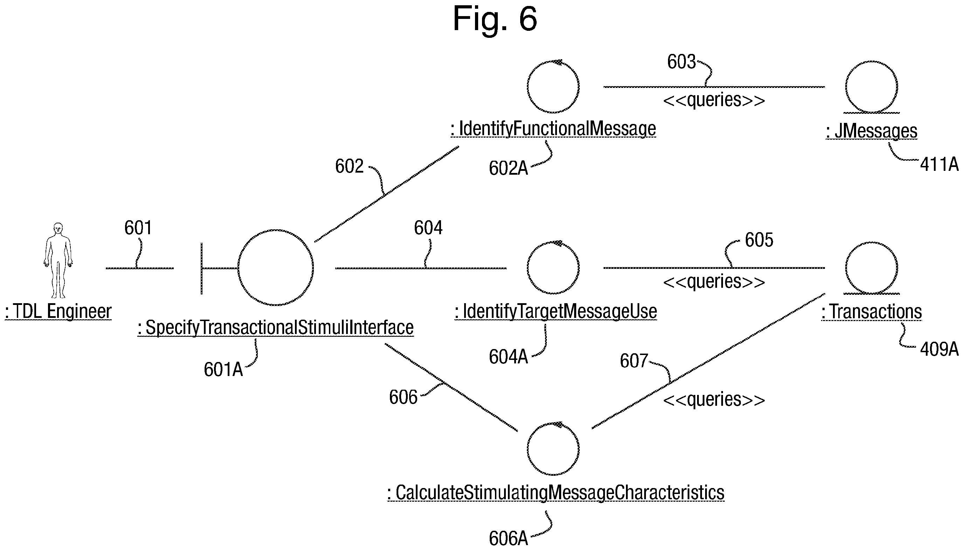

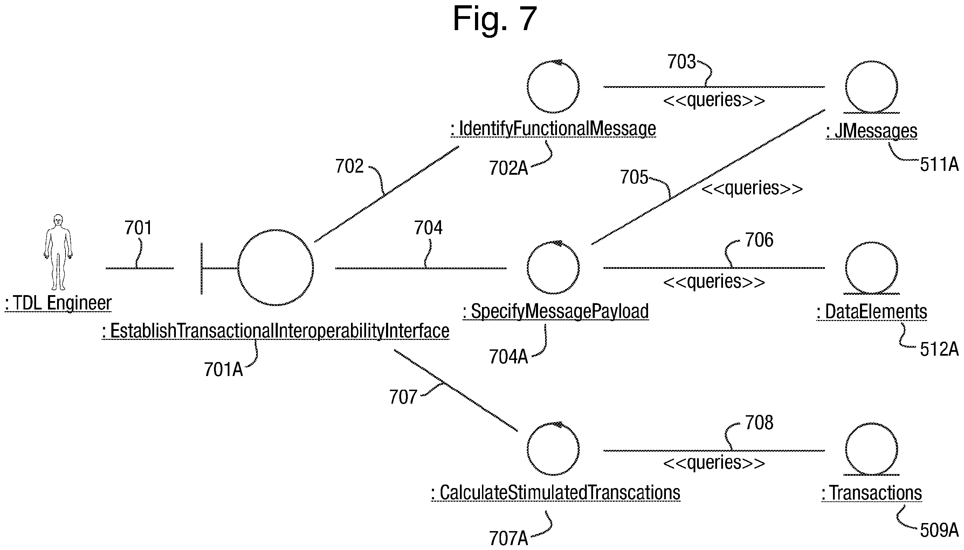

The population of the Transactions models 300 is illustrated by the UML-type collaboration diagrams in Figure 4 through to Figure 7. Figures 4 and 5 deal with the creation of the Transactions model, whilst Figures 6 and 7 describe the behaviour that may make use of the Transactions model.

Figure 4 shows operations performed to capture the Transmit Table. At step 401, the TDL Engineer creates and/or updates the Transactions model 300 components via a Link 16 standard Transmit Table Parsing interface 401A (part of the MMI 322 of the tool 123). This allows the user to identify the relevant source data set to be used. At step 402, the Transmit Table Word Parser parses the component of the Link 16 TDL standard containing the relevant transmit table(s) (this is in Section 5, Part 4 of DoD, *'Tactical Data Link (TDL) 16 Message Standard',* MIL-STD-6016C, 31-Mar-2004, standard document) from the relevant Microsoft (MS) Word document and generates an equivalent document in XML (a collection of XML documents may be generated). The well-formedness of the XML documents generated may be checked via conformance to a schema.

At step 403, the MS Word document component of the Link 16 TDL standard 403A is parsed and at step 404 an XML document 404A containing the relevant items of the Transmit Table(s) is generated conforming to defined well-formedness constraints defined in a schema (not shown). At step 405, the Transmit Table Parser 405A (which can be, for example, an auto-generated component within the EMF see, for example, Stienberg, D., Budinsky, F., Paternostro, M., Merks, E., 'EMF - Eclipse Modeling Framework', 2nd ed., Addison-Wesley, 2008) parses each Transmit Table XML document against the relevant XML document schema and populates the Transmit Tables model 405B (this model conforms to the structure of the source XML document and is not in this instance the structure required, hence a further transformational stage is required via step 408).

At step 406 the Transmit Table Parser parses the specified Transmit Table XML document. As step 407, the Transmit Table Parser generates an Ecore model for the specified XML source document. At step 408, the Transmit Tables to Transactions model transformation 408A transforms and merges each transmit table into a single integrated model of both transmit and receive tables and binds these to the underlying Message Catalogue and Data Dictionary components. These may comprise pre-existing components generated via a similar process, such as the ones described in the patent filing referenced above.

At step 409, the Transmit Tables model 405B is transformed into the Transactions model and at step 410 a single Transactions model 409A is generated. At step 411 references from each transmit table to specific J-Messages 411A are resolved and at step 412 references from each transmit table to specific Data Elements 412A are resolved.

Figure 5 shows operations performed to populate the Receive Table. At step 501 the TDL Engineer creates and/or updates the Transactions model 300 components via the Link 16 standard Receive Table Parsing interface 501A (the MMI component). This allows the user to identify the relevant source data set to be used. At step 502, the Receive Table Word Parser 502A parses the component of the Link 16 TDL standard containing the relevant receive table(s) (this is in Section 5 Part 5 of the abovementioned DoD document) from the relevant MS Word document and generates an equivalent document in XML (a collection of XML documents may be generated). The well-formedness of the XML documents generated may be checked via conformance to a schema.

At step 503, the MS Word document component 503A of the Link 16 TDL standard is parsed. At step 504, an XML document 504A containing the relevant items of the Receive Table(s) is generated conforming to defined well-formedness constraints defined in a schema (not shown). At step 505, the Receive Table Parser 505A (an auto-generated component within EMF) parses each Receive Table XML document against the relevant XML document schema and populates the Receive Tables model 505B (this model conforms to the structure of the source XML document and is not in this instance the structure required, hence a further transformational stage is required via step 508).

At step 506, the Receive Table Parser 505A parses the specified Receive Table XML document and at step 507 the Receive Table Parser generates an Ecore model for the specified XML source document. At step 508, the Receive Tables to Transactions model transformation 508A transforms and merges each receive table into a single integrated model of both transmit and receive tables and binds these to the underlying Message Catalogue and Data Dictionary components (these can comprise pre-existing components generated via a similar process, such as the ones described in the patent filing referenced above). At step 509, the Receive Tables model is transformed into the Transactions model 509A. At step 510, a single Transactions model is generated. At step 511, references from each receive table to specific J-Messages 511 A are resolved. At step 512, references from each receive table to specific Data Elements 512A are resolved.

Figure 6 details example operations that can be involved in steps 204B and 206B of Figure 2. At step 601, the TDL Engineer uses the Transactions 509A and J-Message 511A models, via the Specify Transactions Stimuli Interface 601A of the tool 123, to identify a Message and Message Use of interest and then instructs the tool 123 to calculate and display the field characteristics required of the message to be transmitted such that the required Message Use (and associated transaction) is stimulated in the receiver. At step 602, the Identify Functional Message component 602A allows the user to browse and select the message to be sent to the receiving platform. At step 603, the J-Message model component 511A is queried for its contents (the Message Catalogue) and at step 604 the Identify Target Message Use component 604A allows the user to browse the Message Uses applicable to the selected message and select one or more Message Uses to identify the transactions to be stimulated in the receiving platform.

At step 605, the Transactions model component 509A is queried for all Message Uses and the associated Transaction identifier for the specified message. At step 606, the Calculate Stimulating Message Characteristics component 606A calculates the (range of) values required within key fields (called discriminators) to cause the receiving platform to trigger the specified Message Uses (and associated transactions). The set of values required by the key fields (discriminators) is checked against the set of values that may be transmitted as identified in the model capturing the transmit rules (transmit table) in 409A. Hence, only valid message payloads are identified against the standard and/or the platform-specific documentation. Results of the calculation are presented to the TDL Engineer via user interface 601A (results could be persisted in some form if required). At step 607, the Calculate Stimulating Message Characteristics component 606A queries the Transactions model 509A to identify the relevant discriminators and triggering values (the Transactions model is linked to both the J-Message and Data Elements models and can hence navigate through messages to fields (DFI/DUIs) and data values (DIs)).

Figure 7 details example operations that can be involved in steps 204A and 206A of Figure 2. At step 701, the TDL Engineer uses the J-Message model 411A, via an Establish Transactional Interoperability Interface component 701 A of the tool 123, to identify a Message of interest (a message and payload that may be transmitted in accordance with the restrictions identified by the standard and/or platform-specific documentation). The message payload is populated with reference to the Data Elements model 412A, which ensures that all values used are valid with respect to the standard and/or platform-specific documentation. The populated message is then evaluated against the Transactions model 509A to identify the collection of Message Uses and hence transactions that would be stimulated in the receiving platform (again, the receive rules may come from the standard and/or platform-specific documentation).

At step 702, the Identify Functional Message component 702A allows the user to browse and select the message that is to be populated and *sent* to the receiving platform. At step 703, the J-Message model component 411A is queried for its contents (the Message Catalogue). At step 704, the Specify Message Payload component 704A allows the user to populate any number of the fields of the words contained in the selected message. Values assigned to fields are validated against the definitions provided by the Data Elements model such that the DFI/DUIs are only assigned legal values (DIs).

At step 705, the J-Messages model component is queried for all words contained within the specified message and all fields (DFI/DUIs) contained within each word. At step 706, the Data Elements model 412A is queried to validate the value (DI) assigned to each field (DFI/DUI) in each word of the specified message, and the message as a whole is validated against the transmit rules (transmit table) defined by the standard and/or platform-specific documentation - 409A. At step 707, the Calculate Stimulated Transactions component 707A calculates the collection of Message Uses (and hence transactions) that would be stimulated by the specified message with the defined payload. The collection of Message Uses and transactions stimulated are presented to the TDL Engineer via the user interface 701 (again, results could be persisted in some form if required). At step 708, the Transactions model 509A is queried to ascertain each Message Use stimulated by the specified populated message by comparing the payload against the defined collection of discriminators for each Message Use. The Transaction model will return zero or more Message Uses (and transactions) for each specified message.

The tool 123 therefore has the ability to specify a valid message that is guaranteed to stimulate a specific Message Use in the receiving platform (if one exists) and specify an arbitrary (but valid) message payload and then query the model to identify the (possibly empty) collection of Message Uses that would be stimulated by its reception. An additional and very useful capability is to validate that each Message Use can be stimulated by at least one message payload that is valid against the set of rules governing its population; i.e. validate the receive rules against the transmit rules to reveal any inconsistencies in the standard and/or platform-specific documentation. Although this may be of interest at the level of the standard it is likely to be of somewhat more value when applied at the platform specification level, such that it is possible to confirm that, for example, a first platform could construct a message (which could comprise a varying sequence of words) that could be received by a second platform and stimulate the required Message Use on the second platform. This can be achieved by selecting a message and then iterating over each Message Use defined in the Receive Tables, populating the message payload from the collection of values defined by the discriminators and confirming that the message payload is valid against the rules defined by the Transmit Tables.

The ability to perform an evaluation of platform (or standard) interoperability at the transaction level via an automated tool 123 is facilitated by detailed modelling of the necessary domain concepts; the present inventors achieved this via an analysis of the source documentation, primarily the Link 16 standard for the detailed embodiment, and the relevant domain models are illustrated in Figure 3. The packages Standards 301, Messages 308, DataElements 312, PlatformSpecifications 314, MessageSpecifications 318 and Link16Specifications 320 are defined in the earlier patent filing referenced above and the remaining packages will now be detailed.

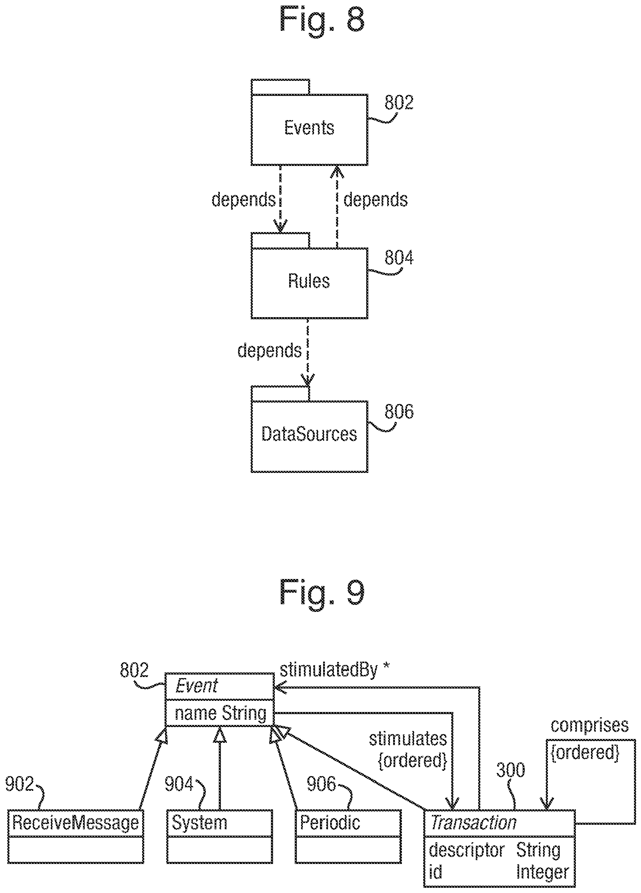

An analysis of the Transactions domain as described by the standard led the inventors to propose three inter-dependent sub-domains: Events, Rules and DataSources, as illustrated in Figure 8. This Figure shows that sub-domain Events 802 has some relationship with sub-domain Rules 804, and that the sub-domain Rules has some relationship with both sub-domains Events and DataSources 806. Each of the sub-domains will be described in more detail below.

Regarding the Events model, the supporting Link 16 standard (document referenced above) describes the stimulation of a transaction as:
"1.3.2.3 Each transaction will occur as a result of a stimulus, which may generally be considered as:
   a. The receipt of a particular type of message that meets the discriminators for a specific message use from the link.
   b. A system event - usually associated with the establishment or detection of a particular condition within the host system. This event may occur automatically (e.g., a timeout), by operator action, or by a combination of the two.
   c. A periodic event - an entirely automatic event that examines data in the database, and on the basis of certain specified parameters, decides whether information is eligible for transmission.
   d. From another transaction - by this means a number of transactions can be linked to define one complete set of processing requirements within a platform for a required activity."

From this, the inventors derived the outline Event model 802 illustrated in Figure 9, which stimulates, and is stimulated by, a Transaction model 900. The Event model is specialised by Receive Message model 902, System model 904 and Periodic model 906.

The notion of a Transaction is further elaborated by the standard as:
"1.3.2.2 Unless otherwise specified within the Appendix, each Appendix function is divided into five specific transactions which make up a Transaction Package consisting of:
   a. Preparation transaction. The preparation portion of the transaction package describes what capability the host system shall provide the operator to allow them to initiate or modify messages on the link.
   b. Transmission transaction. The transmission portion of the transaction package describes the requirements placed on the host system to transmit messages on the link either after an operator action to enable the message for transmission, automatically based on outside stimuli, or automatically as required for receipt compliance.
   c. Reception transaction. The reception portion of the transaction package describes the processing the host system is required to perform to receive a Link 16 message from the terminal and the required display or alert processing required to notify the operator of the receipt of the message.
   d. Purging/Deletion transaction. The purging/deletion transaction portion of the transaction package describes the processing required to remove a record from the host system database either via a timeout (purging) or by deleting the entry in the database.
   e. Special Considerations. Transactions or rules not covered by Paragraph 1.3.2.2.a through Paragraph 1.3.2.2.d."

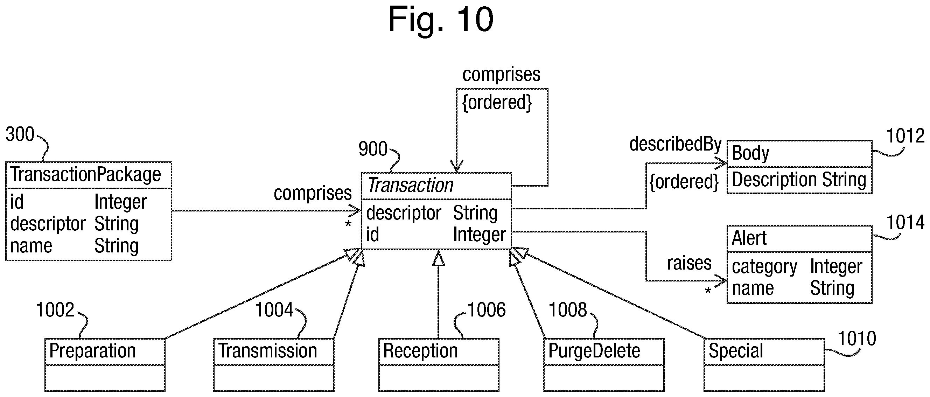

From this, the inventors derived the refined Transaction model 900 illustrated in Figure 10, from which the Transaction package 300 is comprised. The Transaction model is specialised by Preparation 1002, Transmission 1004, Reception 1006, Purge Delete 1008 and Special 1010 models. The Transaction package may be described by a Body model 1012 and may raise an Alert (captured by the Alert model 1014). It is noted that the Body concept provides the hook from the Transaction heading to the description of its processing. The body of a transaction may be stated in natural language. The approach may further include the migration of natural language transaction descriptions to a machine processable (and analyzable) form. The Transaction Package concept provides a home for the collection of Transactions.

Regarding the Rules model 804, this is derived from an analysis of the Transmit and Receive Tables of the standard. Such rules define the sequence of words to be transmitted (since a message may comprise a number of words, a subset of which may be required for transmission in response to specific conditions), and the guard conditions to be applied to a received message to specify the collection of Message Uses to be applied and, hence, the transactions that are to be executed by the receiving platform.

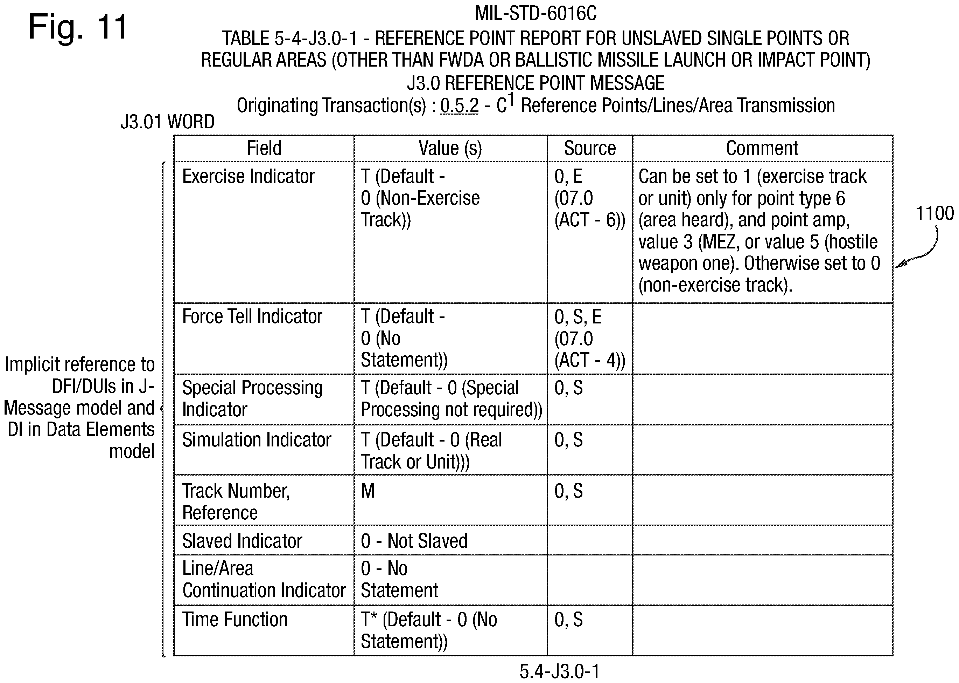

The standard defines Transmit rules in the form 1100 illustrated in Figure 11. It is noted that the Transmit Table makes implicit references to the fields (DFI/DUIs) of the relevant message (in this example J3.0) and also makes reference to specific values (DIs) to be assigned to the fields (such DIs are contained in the Data Elements model). This is an opportunity for inconsistencies to occur in the document-based standard and/or platform-specific documentation, whereas the model-based approach obviates this via explicit links between models (i.e. the data is declared once in the relevant model and referenced by other models, constraints over the models identify dangling references, there is no duplication and hence no inconsistency). There is an explicit reference to the source of the data to be sent, as described below.

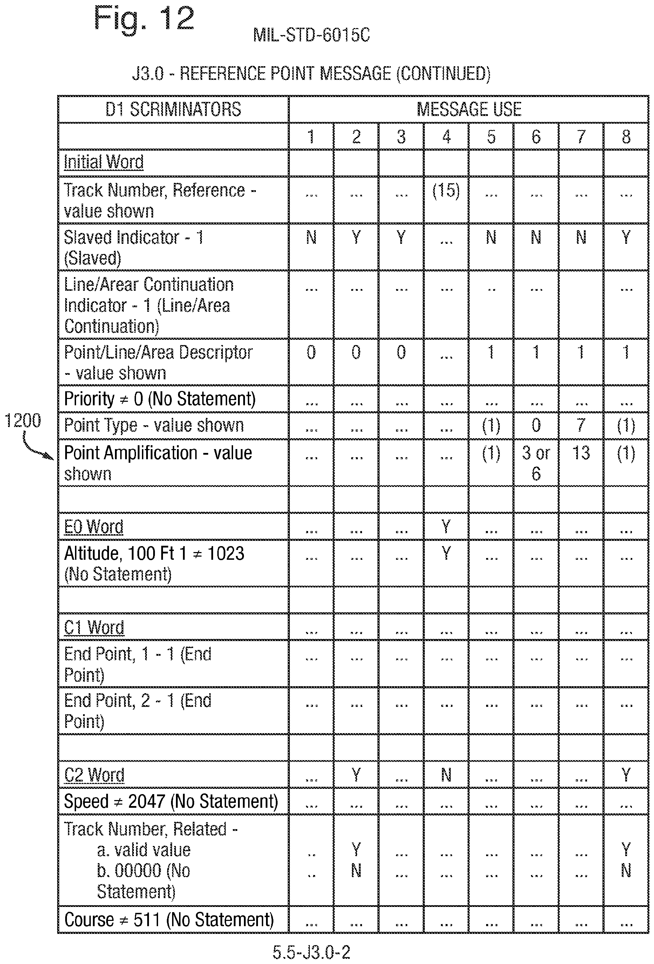

The standard defines Receive rules in the form 1200 illustrated in Figure 12. It is noted that the Receive Table again makes implicit references to a subset of the fields (DFI/DUIs) of the relevant message (in this example J3.0) and may also make reference to specific values (DIs) to be checked in the fields (such DIs are contained in the Data Elements model). Again, this is an opportunity for inconsistencies to occur in the document-based standard. The subset of fields to be checked are called *discriminators,* a Message Use is invoked if the logical *and* of all relevant discriminators evaluates to true, hence zero or more Message Uses may be invoked upon reception of a message. In situations where multiple Message Uses are triggered the practice appears to be to invoke the Message Uses (and associated transactions) in monotonically increasing order. Again, the required sequence of invocation may be made explicit via the model-based approach.

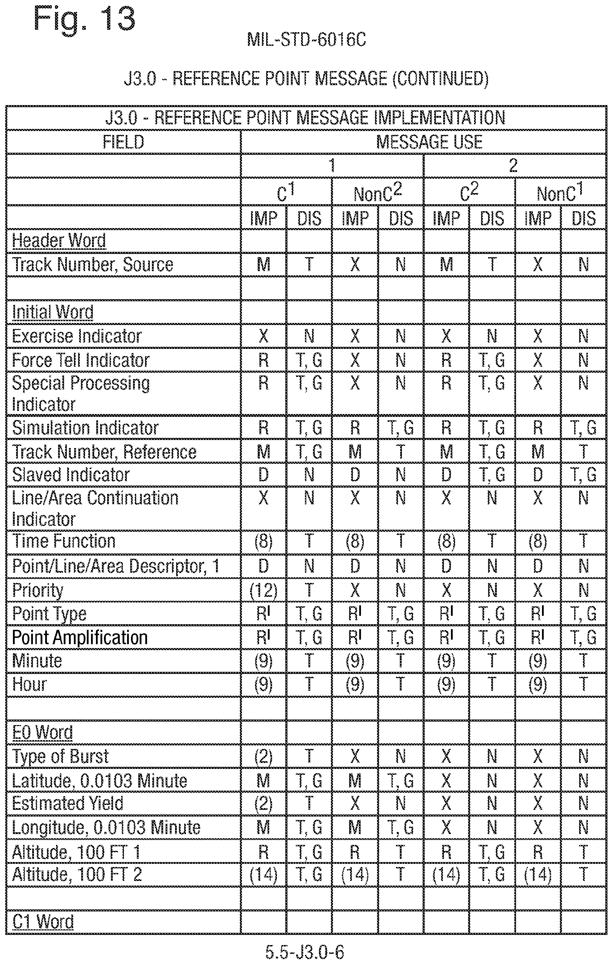

A secondary aspect to the receipt of messages and the invocation of the corresponding transaction(s) are the display implementation requirements as illustrated in Figure 13. The display requirements are structured by Message Use (which is determined via the receive rules) and by platform type. The example partitions the display requirements into two groups of platform type, C² and Non-C², although other groupings are possible. For each group the message (word) fields are characterised by implementation (IMP) and display (DIS) requirements. Implementation requirements are more complex than simply a binary choice, (e.g.) defining the range of values (DI) to be implemented; some fields may be mandatory, others optional, etc. Display requirements indicate which fields should be displayed to the user via textual and/or graphical means; the filtering of display requirements may provide a useful feature to aid the construction and/or validation of platform-specific documentation.

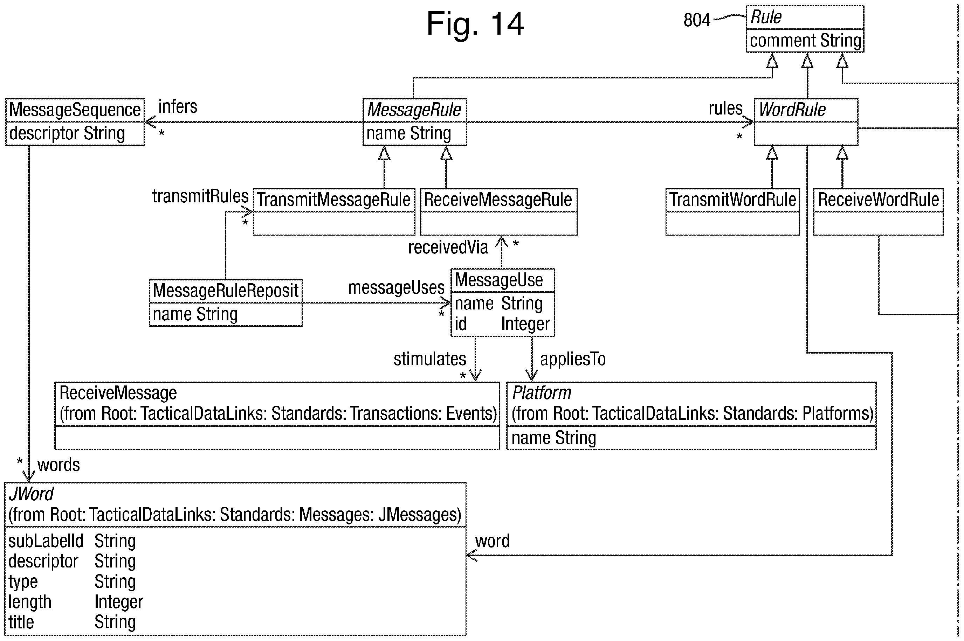

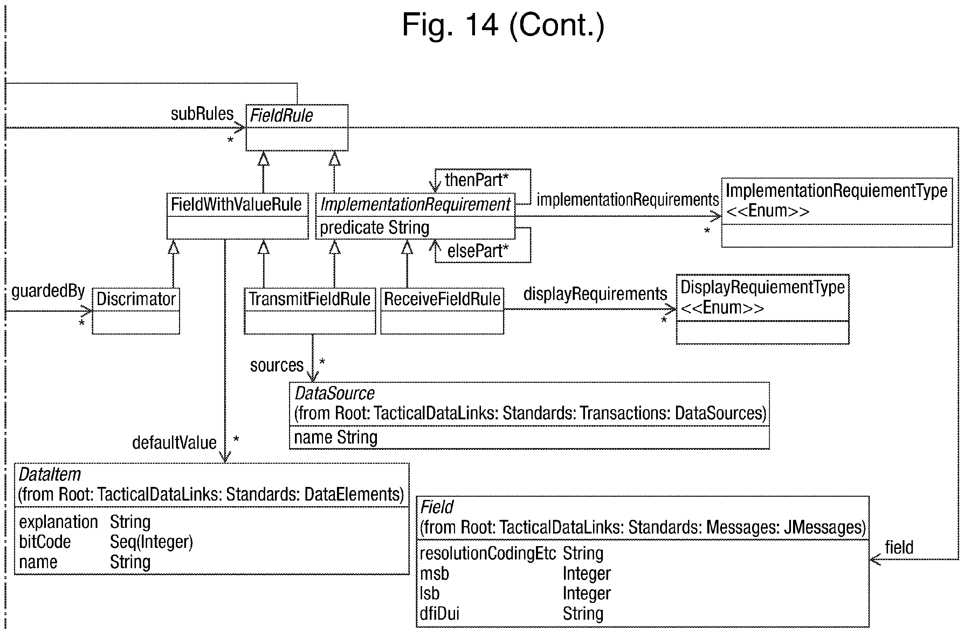

The Rules model 804 captures the concepts described above for Transmit/Receive Rules and Display Requirements and is shown in Figure 14.

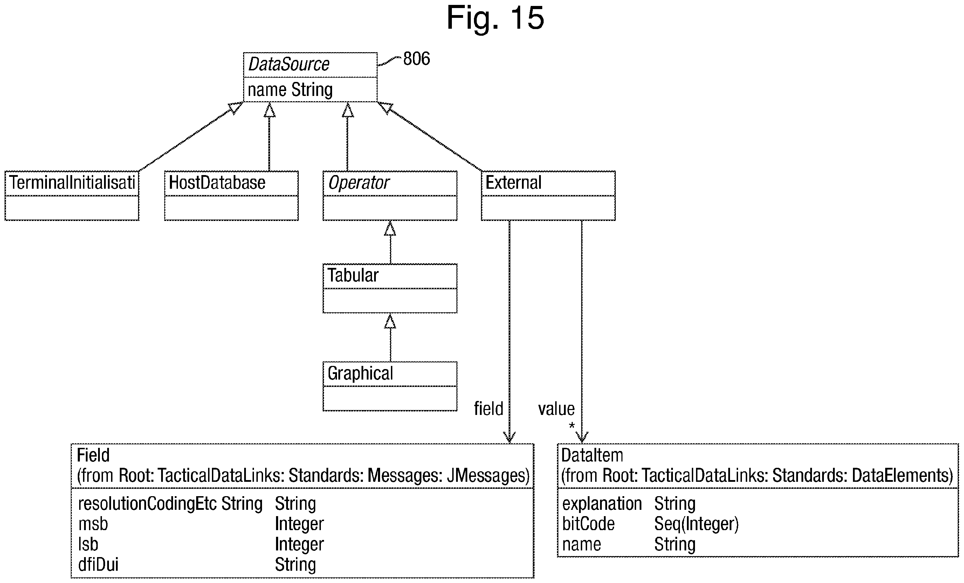

Turning to the Data Source concept (806), this relates only to the transmit side of the Transactions model and it simply defines the entity from which a value for a field should be retrieved prior to transmission. The standard identifies the following entities as data sources: Terminal Initialisation, Host Database, Operator, and External. The operator entity may comprise Textual and Graphical data sources, whilst an External data source is a reference to a field within a message. The analysis of this by the inventors resulted in the Data Sources model 806 illustrated in Figure 15.

The inventors' analysis of the behavioural specification of the Link 16 has resulted in a fairly complex model structured in three packages (Events 802, Rules 804, and Data Sources 806). The Transactions model 300 captures the Message Catalogue and Data Dictionary components to provide an executable suite of models capable of validating consistency of data (via well-formedness rules). The example constraint below ensures that each Message Use is handled by a Transaction of type Reception.

```
 @Constraint HandledByReceptionTransaction
    not self.isSink() implies
      self.stimulates->forAll(receiveEvent |
         receiveEvent.stimulates->forAll(transaction |
            transaction.isKindOf(Reception)))
    fail self.name + " MU: " +
           self.id.toString() +
           " must result in the stimulation of a Reception
 Transaction object"
 end
```

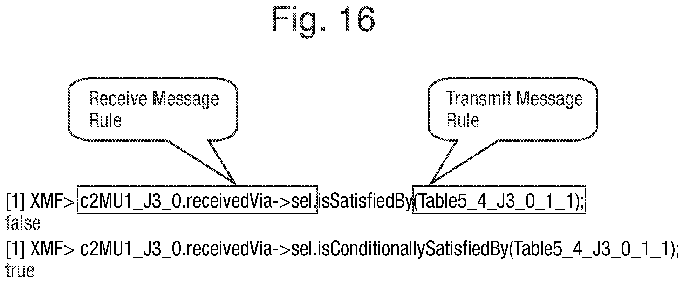

The executable Transactions model is able to evaluate transaction-level interoperability of both platforms and also the standard itself. As an example, Figure 16 illustrates an evaluation of the ability of the transmit rule specified by Table 5.4-J3.0-1 of the standard to stimulate the Message Use 1 for a C² platform (message J3.0). The first operation called (isSatisfiedBy) checks for bitwise compatibility, whereas the second operation called (isConditionallySatisfiedBy) checks to see if the range of values admitted by the transmit table have the scope required to stimulate the specified Message Use.

A further advantage of adopting a model-based approach is that the models may be transformed to support additional requirements, such as transformation into a human-readable document view. Queries may be defined to provide additional functions, such as filtering the model for the display requirements of a specific Message Use (see the Example Custom Report (Display Requirements) code example below), making the source material more accessible by reducing unnecessary clutter. (A similar feature has also been demonstrated to access implementation requirements and discriminators.)

```
 [1] XMF> c2MU1_J3_0.receivedVia->sel.printDisplayRequirements(stdout,
 0);
 J3.0 Receive Rules - Display Requirements:
 J3.0I - Display Requirements:
  Valid time functions as described in Table D.5.1-1
  1681/1 - TIME FUNCTION : Set{'TabularDisplay'}
  385/3 - EXERCISE INDICATOR (EX IND) : Set{'NotApplicable'}
  1720/1 - LINE/AREA CONTINUATION INDICATOR (LAC IND) :
  Set{'NotApplicable'}
  Time Function <> 0
  792/1 - HOUR : Set{}
   792/1 - HOUR : Set{'TabularDisplay'}
   792/1 - HOUR : Set{'TabularDisplay'}
  1554/2 - POINT/LINE/AREA DESCRIPTOR, 1 (PLA DES, 1) :
  Set{'NotApplicable'}
  354/2 - FORCE TELL INDICATOR (FT IND) :
  Set{'GraphicalDisplay','TabularDisplay'}
  1716/1 - SLAVED INDICATOR (SLV IND) : Set{'NotApplicable'}
```

Embodiments of the present invention provide a model-based approach to a problem affecting a number of TDL programmes and potentially the TDL standards themselves and, hence, the many users. A Use Case model has been described which identifies a number of relevant use cases, as well as the design and implementation of a model-based approach to their implementation using both the XMF (Mosaic) and Eclipse Epsilon toolkits and is thus technology independent. The use cases were decomposed into a number of stereotypical activities required to provide tool support and rigour to what is currently a challenging, manually intensive and potentially error-prone task. The detailed embodiment is based on the Link 16 TDL; however, the approach is also applicable to other TDLs, such as Link 11 and VMF.

## Claims

1. A computer-implemented method of assessing transaction-level interoperability over a Tactical Data Link, TDL, the method including:
obtaining (202) TDL transaction model data for a platform and/or a TDL standard, the transaction model data including data representing a plurality of TDL transactions that can be performed by the
platform or which are available to the standard, and data describing a plurality of messages that stimulate particular said TDL r transactions and details of messages that may be composed by the platform according to the standard or platform-specific documentation;
obtaining (204B) TDL transaction data representing a desired TDL transaction to be stimulated from amongst the plurality of TDL transactions,
using (206B) the TDL transaction data with the TDL transaction model data to assess which of the plurality of messages will stimulate the desired TDL transaction according to the TDL transaction model, and
processing (208) the result of the assessment.

2. A method according to claim 1, wherein using (204B) the TDL transaction data with the TDL transaction model data to assess which of the plurality of messages will stimulate the desired TDL transaction according to the TDL transaction model includes determining field characteristics of a message to be transmitted so that the desired TDL transaction is executed.

3. A method according to claim 1, wherein the TDL transaction model data includes data relating to at least one Transmit specification and/or at least one Receive specification.

4. A method according to claim 3, wherein the step of using (204B) the TDL transaction data with the TDL transaction model data to assess which of the plurality of messages will stimulate the desired TDL transaction according to the TDL transaction model includes:
generating valid message data from values within key fields of a message known to cause a receiving platform to stimulate the desired TDL transaction, and
confirming that the valid message is valid against rules defined by at least one the Transmit specification.

5. A method according to any one of the preceding claims, wherein the TDL transaction model data is used to check whether another platform of a same or different type will execute the desired TDL transaction upon receipt of the message.

6. A method according to any one of the preceding claims, further including creating the TDL transaction model data using information derived from at least part of a standards document relating to the TDL.

7. A method according to claim 6, wherein the creating includes parsing at least part of the standards document to populate at least one model.

8. A method according to any one of the preceding claims, further including creating the TDL transaction model data using information derived from at least part of an implementation document relating to the platform.

9. A method according to claim 8, wherein the creating includes parsing at least part of part of the implementation document to populate at least one model.

10. A method according to claim 7 or 9, wherein the model comprises an executable model, e.g. an XMF or Eclipse Modelling Framework document.

11. A method according to any one of the preceding claims, wherein the TDL comprises Link 16.

12. A computer-implemented method of assessing transaction-level interoperability over a Tactical Data Link, TDL, the method including:
obtaining (202) TDL transaction model data for a platform and/or a TDL standard, the TDL transaction model data including data representing a plurality of TDL transactions that can be performed by the
platform or which are available according to the standard, and data describing a plurality of messages that stimulate particular said TDL transactions and details of messages that may be composed by the platform according to the standard or platform-specific documentation;
obtaining (204A) message data representing a message to be transferred over the TDL,
using (206A) the message data with the TDL transaction model data to assess which of the plurality of TDL transactions the message represented by the message data will stimulate according to the TDL transaction model, and
processing (208) the result of the assessment.

13. A method according to claim 12, wherein the step of using (206A) the message data with the TDL transaction model data to assess which of the plurality of TDL transactions the message represented by the message data will stimulate according to the TDL transaction model includes:
generating valid message data populated with values that are valid with respect to the standard, and
evaluating the valid message data against the TDL transaction model data to identify which of the plurality of TDL transactions will be stimulated upon receipt of the valid message data.

14. A system (120) configured to execute a method according to any one of the preceding claims.

15. A computer program element comprising: computer code means to make the computer execute a method according to any one of claims 1 to 13.

## Patentansprüche

1. Rechnergestütztes Verfahren zur Beurteilung der Transaktionsniveau-Interoperabilität über einen taktischen Datenlink TDL, wobei das Verfahren die folgenden Schritte umfasst:
Erhalten (202) von TDL-Transaktionsmodelldaten für eine Plattform und/oder einen TDL-Standard, wobei die Transaktionsmodelldaten Daten einschließen, die eine Vielzahl von TDL-Transaktionen darstellen, die von der Plattform umsetzbar sind oder die für den Standard zur Verfügung stehen, und Daten, die eine Vielzahl von Nachrichten beschreiben, die vor allem TDL-Transaktionen stimulieren, und Nachrichtendetails, die von der Plattform gemäß dem Standard oder einer plattformspezifischen Dokumentation zusammenstellbar sind,
Erhalten (204B) von TDL-Transaktionsdaten, die eine gewünschte TDL-Transaktion darstellen, die von der Vielzahl von TDL-Transaktionen zu stimulieren ist,
Verwenden (206B) der TDL-Transaktionsdaten mit den TDL-Transaktionsmodelldaten zwecks Beurteilung, welche Nachricht von der Vielzahl von Nachrichten die gewünschte TDL-Transaktion gemäß dem TDL-Transaktionsmodell stimulieren wird, und
Verarbeiten (208) des Auswertungsergebnisses.

2. Verfahren nach Anspruch 1, wobei das Verwenden (204B) der TDL-Transaktionsdaten mit den TDL-Transaktionsmodelldaten zwecks Beurteilung, welche Nachricht von der Vielzahl von Nachrichten die gewünschte TDL-Transaktion gemäß dem TDL-Transaktionsmodell stimulieren wird, das Bestimmen von Feldmerkmalen einer zu übertragenden Nachricht einschließt, so dass die gewünschte TDL-Transaktion durchgeführt wird.

3. Verfahren nach Anspruch 1, wobei die TDL-Transaktionsmodelldaten Daten einschließen, die sich auf mindestens eine Übertragungsspezifikation und/oder auf mindestens eine Empfangsspezifikation beziehen.

4. Verfahren nach Anspruch 3, wobei der Schritt des Verwendens (204B) der TDL-Transaktionsdaten mit den TDL-Transaktionsmodelldaten zwecks Beurteilung, welche Nachricht der Vielzahl von Nachrichten die gewünschte TDL-Transaktion gemäß dem TDL-Transaktionsmodell stimulieren wird, einschließt:
Generieren gültiger Nachrichtendaten aus Werten innerhalb von Schlüsselfeldern einer Nachricht, die dafür bekannt ist, eine Empfangsplattform zu veranlassen, die gewünschte TDL-Transaktion zu stimulieren, und
Bestätigen, dass die gültige Nachricht gegenüber Regeln gültig ist, die von mindestens der Übertragungsspezifikation definiert sind.

5. Verfahren nach einem der vorangehenden Ansprüche, wobei die TDL-Transaktionsmodelldaten verwendet werden um zu prüfen, ob eine andere Plattform eines identischen oder unterschiedlichen Typs die gewünschte TDL-Transaktion nach Empfang der Nachricht ausführen wird.

6. Verfahren nach einem der vorangehenden Ansprüche, umfassend ferner das Erstellen der TDL-Transaktionsmodelldaten unter Verwendung von Informationen, die aus mindestens einem Teil eines Standarddokuments abgeleitet ist, das sich auf den TDL bezieht.

7. Verfahren nach Anspruch 6, wobei das Erstellen Parsing mindestens eines Teils des Standarddokuments einschließt, um mindestens ein Modell auszufüllen.

8. Verfahren nach einem der vorangehenden Ansprüche, umfassend ferner das Erstellen der TDL-Transaktionsmodelldaten unter Verwendung von Informationen, die aus mindestens einem Teil eines Implementierungsdokuments abgeleitet sind, das sich auf die Plattform bezieht.

9. Verfahren nach Anspruch 8, wobei das Erstellen Parsing mindestens eines Teils des Implementierungsdokuments einschließt, um mindestens ein Modell auszufüllen.

10. Verfahren nach Anspruch 7 oder 9, wobei das Modell ein ausführbares Modell, beispielsweise ein XMF oder ein Eclipse Modelling Framework-Dokument, umfasst.

11. Verfahren nach einem der vorangehenden Ansprüche, wobei der TDL einen Link 16 umfasst.

12. Rechnergestütztes Verfahren zur Beurteilung der Transaktionsniveau-Interoperabilität über einen taktischen Datenlink TDL, wobei das Verfahren die folgenden Schritte umfasst:
Erhalten (202) von TDL-Transaktionsmodelldaten für eine Plattform und/oder eines TDL-Standards, wobei die Transaktionsmodelldaten Daten einschließen, die eine Vielzahl von TDL-Transaktionen darstellen, die von der Plattform umsetzbar sind oder die für den Standard zur Verfügung stehen, und Daten, die eine Vielzahl von Nachrichten beschreiben, die vor allem die TDL-Transaktionen stimulieren, und Nachrichtendetails, die von der Plattform gemäß dem Standard oder einer plattformspezifischen Dokumentation zusammenstellbar sind,
Erhalten (204A) von Nachrichtendaten, die eine Nachricht darstellen, die über den TDL zu übertragen ist,
Verwenden (206A) der Nachrichtendaten mit den TDL-Transaktionsmodelldaten zwecks Beurteilung, welche Transaktion von der Vielzahl von TDL-Transaktionen die Nachricht, die von den Nachrichtendaten dargestellt wird, gemäß dem TDL-Transaktionsmodell stimulieren wird, und
Verarbeiten (208) des Auswertungsergebnisses.

13. Verfahren nach Anspruch 12, wobei der Schritt des Verwendens (206A) der Nachrichtendaten mit den TDL-Transaktionsmodelldaten zwecks Beurteilung, welche Transaktion von der Vielzahl von TDL-Transaktionen, die Nachricht, die von den Nachrichtendaten dargestellt ist, gemäß dem TDL-Transaktionsmodell stimulieren wird, einschließt:
Generieren gültiger Nachrichtendaten, die mit Werten gefüllt sind, die im Verhältnis zum Standard gültig sind, und
Auswerten der gültigen Nachrichtendaten gegenüber den TDL-Transaktionsmodelldaten zwecks Feststellung, welche Transaktion der Vielzahl von TDL-Transaktionen nach Empfang der gültigen Nachrichtendaten stimuliert werden wird.

14. System, (120), das konfiguriert ist, um ein Verfahren nach einem der vorangehenden Ansprüche auszuführen.

15. Rechnerprogrammelement, umfassend: Rechnercodemittel, um den Rechner zu veranlassen, ein Verfahren nach einem der Ansprüche 1 bis 13 auszuführen.

## Revendications

1. Procédé, mis en oeuvre par ordinateur, d'évaluation d'interopérabilité de niveaux d'opérations sur une liaison de données tactiques, TDL, le procédé comprenant les étapes ci-dessous consistant à :
obtenir (202) des données de modèle d'opérations de liaison TDL pour une plate-forme et/ou un standard de liaison TDL, les données de modèle d'opérations incluant des données représentant une pluralité d'opérations de liaison TDL qui peuvent être mises en oeuvre par la plate-forme, ou qui sont à disposition du standard, et des données décrivant une pluralité de messages qui stimulent notamment lesdites opérations de liaison TDL, et des détails de messages qui peuvent être composés par la plate-forme selon le standard ou une documentation spécifique à la plate-forme ;
obtenir (204B) des données d'opérations de liaison TDL représentant une opération de liaison TDL souhaitée devant être stimulée parmi la pluralité d'opérations de liaison TDL ;
utiliser (206B) les données d'opérations de liaison TDL conjointement avec les données de modèle d'opérations de liaison TDL en vue d'évaluer quel message parmi la pluralité de messages stimulera l'opération de liaison TDL souhaitée selon le modèle d'opérations de liaison TDL ; et
traiter (208) le résultat de l'évaluation.

2. Procédé selon la revendication 1, dans lequel l'étape consistant à utiliser (204B) les données d'opérations de liaison TDL conjointement avec les données de modèle d'opérations de liaison TDL en vue d'évaluer quel message parmi la pluralité de messages stimulera l'opération de liaison TDL souhaitée selon le modèle d'opérations de liaison TDL inclut l'étape consistant à déterminer des caractéristiques de champ d'un message devant être transmis de sorte que l'opération de liaison TDL souhaitée est exécutée.

3. Procédé selon la revendication 1, dans lequel les données de modèle d'opérations de liaison TDL incluent des données connexes à au moins une spécification de transmission et/ou à au moins une spécification de réception.

4. Procédé selon la revendication 3, dans lequel l'étape consistant à utiliser (204B) les données d'opérations de liaison TDL conjointement avec les données de modèle d'opérations de liaison TDL en vue d'évaluer quel message parmi la pluralité de messages stimulera l'opération de liaison TDL souhaitée selon le modèle d'opérations de liaison TDL inclut les étapes ci-dessous consistant à :
générer des données de message valide à partir de valeurs au sein de champs clés d'un message susceptible d'amener une plate-forme de réception à stimuler l'opération de liaison TDL souhaitée ; et
confirmer que le message valide est valide relativement à des règles définies par au moins la spécification de transmission.

5. Procédé selon l'une quelconque des revendications précédentes, dans lequel les données de modèle d'opérations de liaison TDL sont utilisées en vue de vérifier si une autre plate-forme d'un type identique ou différent exécutera l'opération de liaison TDL souhaitée suite à la réception du message.

6. Procédé selon l'une quelconque des revendications précédentes, comprenant en outre l'étape consistant à créer les données de modèle d'opérations de liaison TDL en utilisant des informations dérivées d'au moins une partie d'un document standardisé connexe à la liaison TDL.

7. Procédé selon la revendication 6, dans lequel l'étape de création inclut l'étape consistant à analyser au moins une partie du document standardisé en vue de remplir au moins un modèle.

8. Procédé selon l'une quelconque des revendications précédentes, comprenant en outre l'étape consistant à créer les données de modèle d'opérations de liaison TDL en utilisant des informations dérivées d'au moins une partie d'un document de mise en oeuvre connexe à la plate-forme.

9. Procédé selon la revendication 8, dans lequel l'étape de création comprend l'étape consistant à analyser au moins une partie d'une partie du document de mise en oeuvre en vue de remplir au moins un modèle.

10. Procédé selon la revendication 7 ou 9, dans lequel le modèle comprend un modèle exécutable, par exemple un document XMF ou un document d'infrastructure de modélisation Eclipse (Eclipse Modelling Framework).

11. Procédé selon l'une quelconque des revendications précédentes, dans lequel la liaison TDL comprend la « Liaison 16 ».

12. Procédé, mis en oeuvre par ordinateur, d'évaluation d'interopérabilité de niveaux d'opérations sur une liaison de données tactiques, TDL, le procédé comprenant les étapes ci-dessous consistant à :
obtenir (202) des données de modèle d'opérations de liaison TDL pour une plate-forme et/ou un standard de liaison TDL, les données de modèle d'opérations incluant des données représentant une pluralité d'opérations de liaison TDL qui peuvent être mises en oeuvre par la plate-forme, ou qui sont à disposition du standard, et des données décrivant une pluralité de messages qui stimulent notamment lesdites opérations de liaison TDL, et des détails de messages qui peuvent être composés par la plate-forme selon le standard ou une documentation spécifique à la plate-forme ;
obtenir (204A) des données de message représentant un message devant être transféré sur la liaison TDL ;
utiliser (206A) les données de message conjointement avec les données de modèle d'opérations de liaison TDL en vue d'évaluer quelle opération, parmi la pluralité d'opérations, le message représenté par les données de message stimulera selon le modèle d'opérations de liaison TDL ; et
traiter (208) le résultat de l'évaluation.

13. Procédé selon la revendication 12, dans lequel l'étape consistant à utiliser (206A) les données de message conjointement avec les données de modèle d'opérations de liaison TDL en vue d'évaluer quelle opération, parmi la pluralité d'opérations, le message représenté par les données de message stimulera selon le modèle d'opérations de liaison TDL inclut les étapes ci-dessous consistant à :
générer des données de message valide remplies par des valeurs qui sont valides relativement au standard ; et
évaluer les données de message valide par rapport aux données de modèle d'opérations de liaison TDL en vue d'identifier quelle opération, parmi la pluralité d'opérations de liaison TDL, sera stimulée suite à la réception des données de message valide.

14. Système (120) configuré de manière à exécuter un procédé selon l'une quelconque des revendications précédentes.

15. Élément de programme informatique comprenant : un moyen de code informatique pour amener l'ordinateur à exécuter un procédé selon l'une quelconque des revendications 1 à 13.
